# EUROPEAN PATENT SPECIFICATION

(11) **EP 4 621 987 B1**
(45) Date of publication and mention of the grant of the patent: **28.10.2026**
(21) Application number: 24164149.7
(22) Date of filing: 18.03.2024
(51) Int. Cl.: H01P 3/12, H01P 5/02, H01P 11/00, H01Q 21/00

(54) **METHODS AND STRUCTURES FOR REDUCING LEAKAGE FROM AIR WAVEGUIDE ANTENNAS**
VERFAHREN UND STRUKTUREN ZUR VERRINGERUNG VON LECKAGEN VON LUFTWELLENLEITERANTENNEN
PROCÉDÉS ET STRUCTURES POUR RÉDUIRE LES FUITES D'ANTENNES À GUIDE D'ONDES D'AIR

(43) Date of publication of application: 24.09.2025
(73) Proprietor: Aptiv Technologies AG, 8200 Schaffhausen (CH)
(72) Inventor: TALAI, Armin, 8200 Schaffhausen (CH); LEONARDI, Roberto, 8200 Schaffhausen (CH)
(74) Representative: Lewis Silkin LLP

(56) References cited:
- JP-A- 2002 076 716
- JP-A- 2003 304 106
- JP-A- 2004 312 089
- JP-A- 2011 072 025
- US-A1- 2003 137 371
- US-A1- 2004 104 793
- US-A1- 2018 034 140
- PALOMARES-CABALLERO ANGEL ET AL: "Millimeter-Wave 3-D-Printed Antenna Array Based on Gap-Waveguide Technology and Split E-Plane Waveguide", IEEE TRANSACTIONS ON ANTENNAS AND PROPAGATION, IEEE, USA, vol. 69, no. 1, 16 July 2020 (2020-07-16), pages 164 - 172, XP011829222, ISSN: 0018-926X, [retrieved on 20210104], DOI: 10.1109/TAP.2020.3008620

## Description

### Field

The present disclosure relates to an air waveguide antenna, an automotive radar comprising the air waveguide antenna, and a method of manufacturing an air waveguide antenna. The present disclosure concerns reduction of leakage from an air waveguide antenna, and particularly to the application of cavities to the antenna structure to return parallel plate mode energy leakage to the air waveguide, and/or redirect leaked energy away from adjacent antennas.

### Background

An automotive radar comprises a front-end antenna for transmitting electromagnetic waves into free space, and for receiving reflections of the transmitted electromagnetic waves from surrounding surfaces, to detect nearby objects such as vehicles. Common techniques used to construct such automotive radars, and to route the electromagnetic waves along transmission lines between free space and processing circuitry, are based on microstrip and substrate integrated waveguide (SIW) technology. Both technologies require the use of a dielectric substrate, which is lossy and can lead to a reduction in antenna gain.

Air waveguide antennas have been developed to address the disadvantages associated with use of a substrate, such that electromagnetic waves are guided through air-filled structures, rather than solid structures. Such antennas are typically made of injection-moulded metallized plastics, or solid metals such as aluminium or magnesium. The injection moulding process is used to form each of two parts or 'half pieces' of the antenna, which are brought together to complete the antenna. Waveguide portions are formed in opposing surfaces of each part, such that when the two parts of the antenna are brought together, the waveguide portions of each antenna part face each other to complete the waveguide.

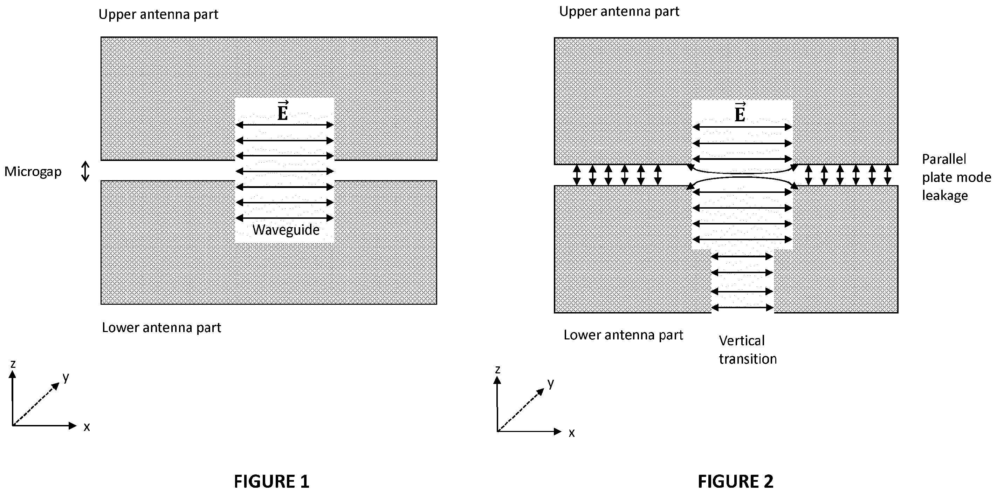

Figure 1 shows an example of a cross-section of a typical 'split-block configuration', in which an upper antenna part and a lower antenna part are brought together such that an upper waveguide portion and a lower waveguide portion face each other to complete the waveguide. During the injection moulding process applied to each of the antenna parts, manufacturing tolerances and warpage means that the opposing surfaces of the upper and lower antenna parts do not fit together exactly. In practice, air gaps exist between the two antenna parts. The air gaps are non-uniform and are typically 0µm - 85µm, but can be greater than 100µm in some areas. In the present disclosure, such gaps are referred to as 'microgaps'.

Such microgaps are undesirable, and can be minimised by mechanical measures such as use of screws to tightly fix the two antenna portions together. Nevertheless, the microgaps may change in size during the lifetime of the antenna due, for example, to thermal expansion and contraction. It is difficult to manufacture the antenna parts in a way which ensures robustness to such variations.

Waveguides are insensitive to microgaps if the microgaps exist in regions in which the current associated with the electromagnetic wave carried by the waveguide is zero. As such, for a rectangular waveguide, it is beneficial to configure the antenna such that the splitting plane between the two antenna parts is in the horizontal (x-y) electric field plane of the waveguide, as shown in Figure 1. In this manner, if the direction of propagation of the electromagnetic wave is perpendicular (y-direction) to the cross-section of the waveguide, such that the waveguide is a horizontal waveguide, no current in the waveguide walls crosses the microgap, and there is no leakage of electromagnetic energy through the microgap.

If, however, the direction of propagation of the electromagnetic wave is vertical (z-direction), which may occur at portions of the antenna at which the electromagnetic wave is carried to free space via a feed or radiating slot, or carried to or from a monolithic microwave integrated circuit (MMIC), there is leakage of electromagnetic energy through the microgap as the current across the microgap is non-zero, as shown in Figure 2. Such leakage is referred to herein as parallel plate mode energy leakage, or parasitic parallel plate mode leakage, between the substantially parallel plates of the upper and lower antenna parts. Such leakage reduces performance the radiofrequency (RF) performance of the antenna due to a reduction in gain, angular coverage angles, signal to noise ratio, and the introduction of undesirable antenna-to-antenna coupling and crosstalk.

In the embodiments set out in the present disclosure, countermeasures are described based on addition of structures to an air waveguide antenna which can reduce, and in some cases, eliminate, the effect of such parallel plate mode energy leakage by redirecting the energy leakage to the air waveguide and/or blocking leakage to adjacent antennas.
Japanese Patent Application 2011 072025 discloses a transmission line structure with choke structures positioned adjacent to waveguide lines to suppress electromagnetic wave leakage at the division surface between conductor plates.
"Millimeter-Wave 3D-Printed Antenna Array Based on Gap-Waveguide Technology and Split E-Plane Waveguide", Palomares-Caballero *et al.,* discloses a millimeter-wave antenna array based on gap-waveguide technology using circular holes arranged in a glide-symmetric pattern to prevent electromagnetic wave leakage.
Japanese Patent Application JP 2003 304106 discloses a waveguide structure with protrusions two-dimensionally and cyclically arranged on opposing faces of metallic blocks to form an EBG-like structure.
Japanese Patent Application JP 2004 312089 discloses a waveguide with heat dissipation holes in the tube wall, which also function to prevent electromagnetic wave leakage.
Japanese Patent Application JP 2002 076716 discloses a waveguide with plural holes at the bonding face to constrain leakage of electromagnetic waves from the clearance at the bonding face.
United States Patent Application US 2003/137371 discloses a waveguide with rounded corners at groove edges to facilitate manufacturing by moulding.
United States Patent Application US 2004/104793 discloses conductor plates with rounded edges at groove openings to allow easier formation by moulding.
United States Patent Application US 2018/034140 discloses an automotive radar comprising injection-moulded air waveguide antennas formed from top and bottom portions coupled at a seam.

### Summary

According to a first aspect, there is provided a method of manufacturing an air waveguide antenna formed of a first antenna portion comprising a first surface having a first air waveguide portion therein, and a second antenna portion comprising a second surface having a second air waveguide portion therein, forming one or more cavities in one or both of the first and second surfaces, determining one or more principal leakage directions of the parallel plate mode energy leakage, and fitting the first and second antenna portions together with the first and second surfaces facing each other, such that the first and second air waveguide portions oppose each other to form an air waveguide; wherein the one or more cavities have a longitudinal extent at an orientation along the first and/or second surfaces which is perpendicular to the determined one or more principal leakage directions; and wherein the one or more cavities are such that parallel plate mode energy leakage of an electromagnetic wave guided by the air waveguide, through an air gap between the fitted first and second surfaces, is redirected.

In this way, an effective, cost-neutral countermeasure against leakage effects is provided. A reduction in leakage can improve RF performance by at least one of preserving signal gain, preserving angular coverage angles of the antenna, increasing signal to noise ratio, and reducing undesirable antenna-to-antenna coupling and crosstalk. Further, the likelihood of an antenna manufactured by this process failing to meet required performance criteria, and therefore being scrapped, is reduced, increasing the yield of the manufacturing process. In addition, it is possible to use both the position of the one or more cavities, and their orientation, to optimise the blockage of parallel plate mode energy leakage for a particular situation.

In embodiments, the one or more of cavities include a cavity disposed adjacent to the respective first or second air waveguide portion, such that the parallel plate mode energy leakage is reflected back into the air waveguide.

In embodiments, the method comprises forming the one or more cavities to have dimensions in accordance with the frequency of the electromagnetic wave to be guided by the air waveguide, such that the reflected energy is in phase with the guided electromagnetic wave. In this manner, the reflected energy interferes constructively with the guided wave, and thus characteristics of the guided wave can be preserved.

In embodiments, the method comprises forming the one or more cavities on the first and/or second surfaces at positions so as to reduce crosstalk between the air waveguide and one or more further air waveguides of one or more respective further antennas. In this manner, coupling of signals between, for example, different antenna feed lines of transmit and receive paths, can be reduced or eliminated.

In embodiments, the method comprises forming one or more cavities in the first surface, and one or more cavities in the second surface, wherein none of the one or more cavities in the first surface is aligned with a cavity in the second surface when the first and second antenna portions are fitted together. In this manner, cavity positions can alternate between the first and second surfaces, which leads to manufacturing advantages, in addition to optimising space usage.

In embodiments, the one or more cavities have a depth of 0.5mm to 0.9mm, and particularly 0.7mm.

In embodiments, the method comprises forming the one or more cavities adjacent to a transition portion of the air waveguide for guiding an electromagnetic wave out of the antenna to either free space, or to a monolithic microwave integrated circuit. Since such gaps between the first and second antenna portions in such regions are associated with significant parallel plate mode energy leakage, arranging the one or more cavities to be close to such regions increases the effectiveness of blocking the leakage.

In embodiments, the first antenna portion is an upper antenna portion, and the second antenna portion is a lower antenna portion, and the vertical centre of each of the at least one of the one or more cavities, in a direction extending between the upper and lower antenna portions, is aligned, in a horizontal direction, with the vertical centre of the transition portion of the air waveguide. Such alignment optimises the reflection of electromagnetic energy back to the waveguide.

In embodiments, a transition between the first or second surface and a sidewall of a cavity is curved. In this manner, the mechanical integrity of the surface of the antenna portion is improved.

In embodiments, the method comprises forming the one or more cavities using injection moulding. In this manner, the cavities can be introduced to the antenna structure as part of the same process as that in which the antenna parts and waveguide routing are formed.

According to a second aspect there is provided an air waveguide antenna, comprising a first antenna portion comprising a first surface having a first air waveguide portion therein, and a second antenna portion comprising a second surface having a second air waveguide portion therein, and one or more cavities in one or both of the first and second surfaces; wherein the first and second antenna portions are arranged to fit together with the first and second surfaces facing each other, such that the first and second air waveguide portions oppose each other to form an air waveguide, wherein the one or more cavities comprise a first group of cavities having a first longitudinal extent at an orientation along the first and/or second surfaces which is perpendicular to a first principal leakage direction, and a second group of cavities having a second longitudinal extent at an orientation along the first and/or second surfaces which is perpendicular to a second principal leakage direction different from the first principal leakage direction; wherein the one or more cavities are such that parallel plate mode energy leakage of an electromagnetic wave guided by the air waveguide, through an air gap between the fitted first and second surfaces, is redirected.

In this manner, an antenna is provided in which the impact on parallel plate mode energy leakage on angular coverage, signal gain, and lifetime performance variations is reduced or eliminated.

In embodiments, the one or more cavities include a cavity disposed adjacent to the respective first or second air waveguide portion, such that the parallel plate mode energy leakage is reflected back into the air waveguide.

According to a third aspect, there is provided an automotive radar comprising the above air waveguide antenna, wherein the air waveguide comprises a transition portion for guiding an electromagnetic wave out of the antenna to either free space, or to a monolithic microwave integrated circuit, MMIC, and at least one of the one or more cavities is disposed adjacent to the transition portion of the air waveguide. Since such gaps between the first and second antenna portions in such regions are associated with significant parallel plate mode energy leakage, arranging the one or more cavities to be close to such regions increases the effectiveness of blocking the leakage.

According to a fourth aspect, there is provided an automotive radar comprising a plurality of the above air waveguide antennas, wherein the one or more cavities are arranged between each of the plurality of antennas to reduce crosstalk between the plurality of air waveguide antennas.

### Brief Description of Drawings

Illustrative embodiments will now be described with reference to the drawings in which:
Figure 1 shows an example of a cross-section of a split-block antenna configuration with a horizontal air waveguide;
Figure 2 shows an example of a cross-section of a split-block antenna configuration with a vertical air waveguide;
Figure 3 shows a cross-section of an air waveguide antenna according to a first embodiment;
Figure 4 shows a plan view of a lower antenna portion of the first embodiment;
Figure 5 illustrates the effect of blocking cavities, according to embodiments, on propagation of parallel plate mode energy leakage from an air waveguide antenna;
Figure 6 shows a plan view of a lower antenna portion of an air waveguide antenna of a second embodiment;
Figure 7 shows a comparison of the effect of blocking cavities on energy leakage from an air waveguide antenna in embodiments;
Figure 8 shows a comparison of the effect of blocking cavities on a forward transmission scattering parameter of an air waveguide antenna according to a third embodiment;
Figure 9 shows a comparison of the effect of blocking cavities on an input reflection scattering parameter of an air waveguide antenna according to a third embodiment; and
Figure 10 shows a manufacturing process according to a fourth embodiment.

### Detailed Description

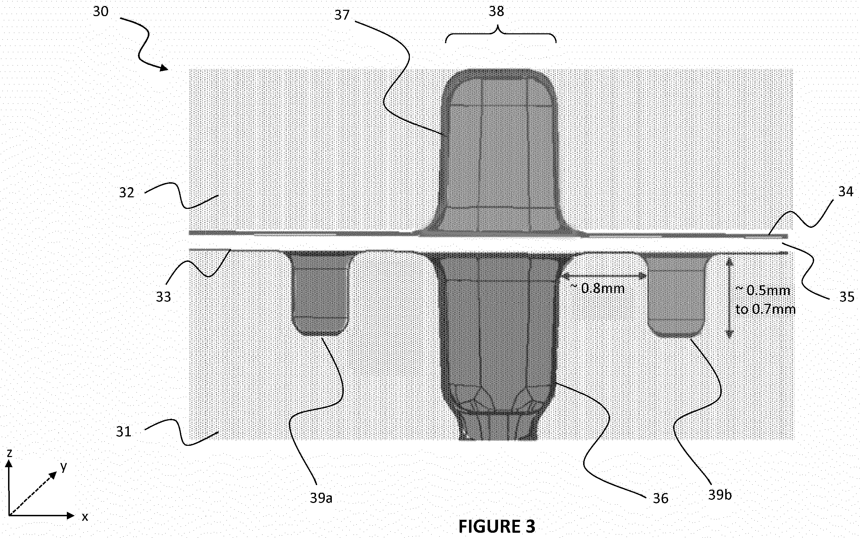

Figure 3 shows a cross-section of an air waveguide antenna 30 according to a first embodiment. The air waveguide antenna 30 is formed of a first antenna portion 31, and a second antenna portion 32. The first and second antenna portions are fitted together so that a first surface 33 of the first antenna portion 31 faces a second surface 34 of the second antenna portion 32. A microgap 35 exists between the first surface 33 and the second surface 34.

The microgap 35 is illustrated as being uniform for simplicity, but the size of the microgap 35 may vary along the length of width of the air waveguide antenna 30.

The first surface 33 comprises a first waveguide portion 36, and the second surface 34 comprises a second waveguide portion 37. Each of the first and second antenna portions 31, 32 is formed by injection moulding, including the formation of the profiles of the first and second waveguide portions 36, 37 in a manner known in the art. The first waveguide portion 36 opposes the second waveguide portion 37 to form an air waveguide 38. The first waveguide portion 36 is open at the lower surface of the first antenna portion 31 so as to carry electromagnetic waves to and from a MMIC below the air waveguide antenna 30 (not shown). The MMIC may process and generate signals for propagation as electromagnetic waves through the air waveguide 38. As such, the direction of propagation of an electromagnetic wave in the air waveguide 38 is in the vertical z-direction in the illustration of Figure 3. In the present disclosure, such an air waveguide is referred to as a vertical transition.

Adjacent to the air waveguide 38 are cavities 39a, 39b. Two cavities are illustrated in Figure 3. In further embodiments, more than two cavities are employed, and as few as one cavity may be employed in some embodiments. In the first embodiment illustrated in Figure 3, the cavities 39a, 39b are in the first antenna portion 31. In further embodiments, one or more cavities are arranged in the second portion 32. In further embodiments, one or more cavities are arranged in each of the first and second antenna portions 31, 32.

In the present disclosure, the term 'adjacent' is not to be construed as limiting the spacing between the cavities 39a, 39b and the waveguide 38 to any specific lateral distance, in the horizontal x-direction, although it is preferred to use as small a distance as is physically possible within the limits of the manufacturing process which produces the air waveguide antenna of the first embodiment. In some embodiments, the manufacturing limit, for a metal-based air waveguide antenna (using, for example, magnesium), is of the order of 0.8mm.

In some embodiments, a plurality of cavities are formed on each side of the left and right sides of the waveguide 38, in which the pluralities are arranged in a sequence having a first cavity which is closest to the air waveguide 38, a second cavity adjacent to the first cavity but further from the air waveguide 38 than the first cavity, and so on. In such cases, the cavity closest to the air waveguide 38 can be considered as adjacent to the air waveguide 38.

In the first embodiment, each cavity 39a, 39b has a depth of between 0.5mm and 0.9mm, preferably 0.7mm. Each cavity 39a, 39b has a width of the order of 0.8mm, and as such, the cavity width is comparable to the spacing to the cavities 39a, 39b from the air waveguide 38.

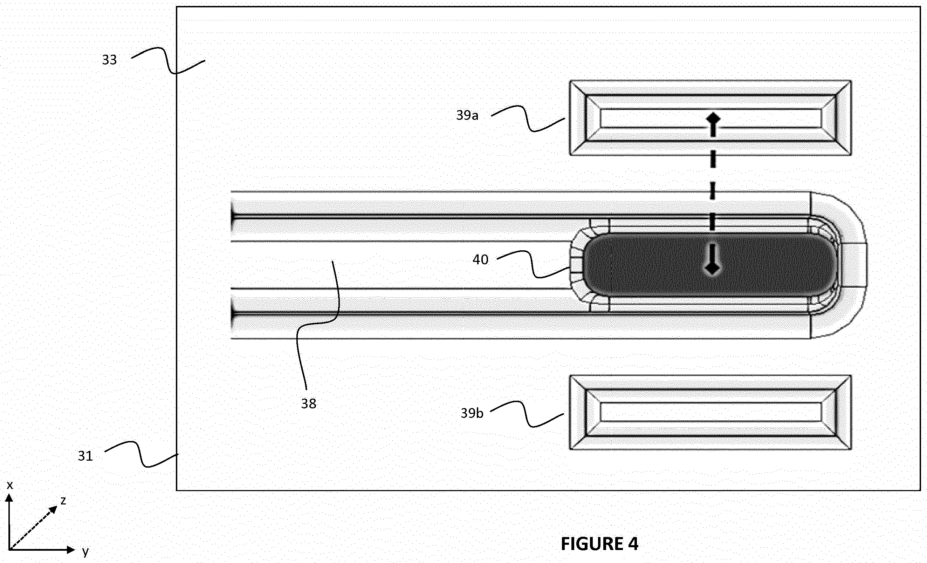

Figure 4 shows a plan view of the first antenna portion 31 according to the first embodiment. When viewed in plan view, the arrangement of the cavities 39a, 39b and the air waveguide 38 is such that a central axis of the vertical transition 40 of the air waveguide 38 is aligned, in the y-direction, with a central axis of the cavities 39a, 39b. As such, it is possible to draw a line substantially parallel with the x-direction, which connects the central axis of the vertical transition of the air waveguide 38 with the central axis of the cavities 39a, 39b. In some embodiments, the openings of the cavities 39a, 39b in the first surface 33 are rectangular, having longer length in the y-direction than in the x-direction, and the central axis of cavities 39a, 39b corresponds to the position of the centre of the longer y-direction dimension.

Aligning the cavities 39a, 39b with the air waveguide 38 in this manner can optimise the RF performance of the air waveguide antenna 30, but it is not essential for the cavities 39a, 39b to be aligned with the air waveguide 38 in this manner. Cavities can, instead, be positioned so that they exist on a radius extending from the air waveguide in any outward direction, at the required spacing.

In particular, it is possible to distribute cavities at additional 'free' positions of the antenna which are not adjacent to a vertical transition, to block leakage of electromagnetic energy in particular directions, as will be described below.

In the embodiment illustrated in Figure 3, a curved transition is formed in sidewalls of the cavities 39a, 39b in regions at which they interface with the first surface 33. Such curved transitions strengthen the mechanical integrity of the antenna portions 31, avoiding sharp discontinuities in the first surface 33 which may otherwise be at risk of breaking. The first and second waveguide portions 36, 37 also show such curved transitions.

As described in relation to Figure 2 above, parallel plate mode energy leakage occurs through the microgap 33 when electromagnetic wave travels through the air waveguide 38. The energy leakage propagates to the cavities 39a, 39b which act to reflect a substantial portion of the energy leakage back towards the waveguide 38. Specifically, electromagnetic energy enters the cavities 39a, 39b, and resonates as an electromagnetic wave within the cavities 39a, 39b. A portion of the electromagnetic wave is reflected from the bottom of the cavities 39a, 39b back along the microgap 33 towards the air waveguide 38. The energy which is returned to the air waveguide 38 combines with the guided electromagnetic wave such that the characteristics of the electromagnetic guided wave, expressed as amplitude, phase, and frequency components, approach a state which would exist without leakage. Leakage of energy out of the air waveguide antenna is thus blocked substantially by the resonant cavities.

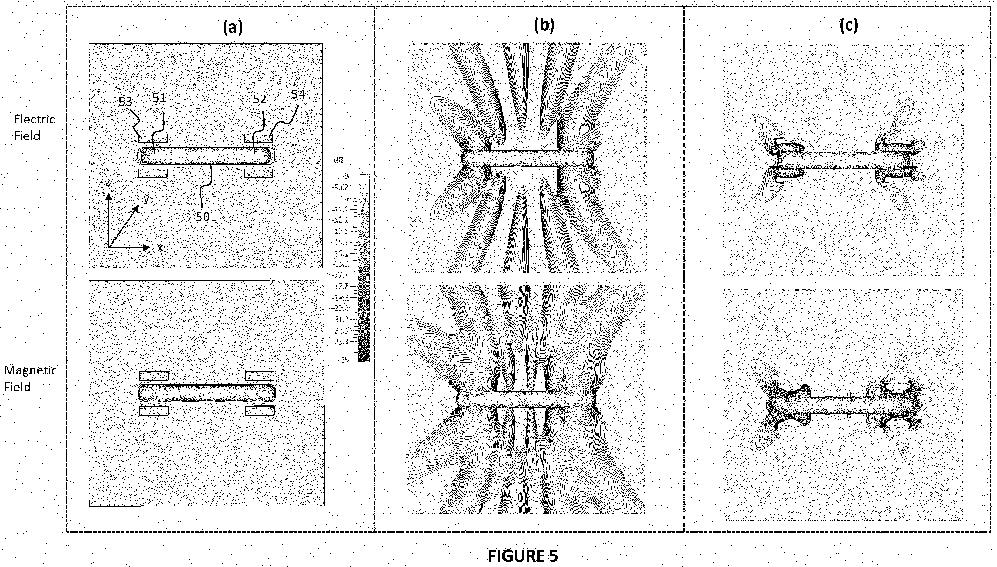

Figure 5 illustrates a simulation of a comparison of the propagation of electric and magnetic fields in different configurations. Figure 5(a) shows a plan view of an ideal reference case, containing an air waveguide 50 having two vertical transitions 51, 52, where no microgap exists, such that the waveguide is fully enclosed. A waveguide of this structure can be formed using a technique such as additive manufacturing, but this is not suitable for large-scale production, in contrast to the injection moulding technique of embodiments. There is no leakage of energy from the air waveguide 50 in this reference case. The electric and magnetic fields are contained within the waveguide, and the cavities have no effect.

Figure 5(b)shows the same air waveguide 50 as that of Figure 5(a), but where the air waveguide antenna structure is such that a 150µm microgap exists between the two antenna half-pieces. No cavities are present in this example, and as such, Figure 5(b) represents a conventional configuration over which the present embodiments are superior. The leakage of electric and magnetic fields from the transition portions is visible as regions of energy propagating outwardly from the waveguide, albeit at a lower magnitude than the magnitude of the energy contained within the waveguide.

Figure 5(c) shows the air waveguide of Figure 5(b) in which resonant cavities 53, 54 are disposed adjacent to the transition portions 51, 52. Here, it can be seen that there is significantly reduced leakage of electric and magnetic fields from the transition portions 51, 52 of the waveguide, such that the overall leakage is represented by small regions of low intensity, in contrast to the larger regions of higher intensity of Figure 5(b). As such, it can be seen that the cavities 53, 54 are particularly effective solutions to the problem of parallel plate mode energy leakage, which exists in mass-produced antennas constructed from two half-pieces.

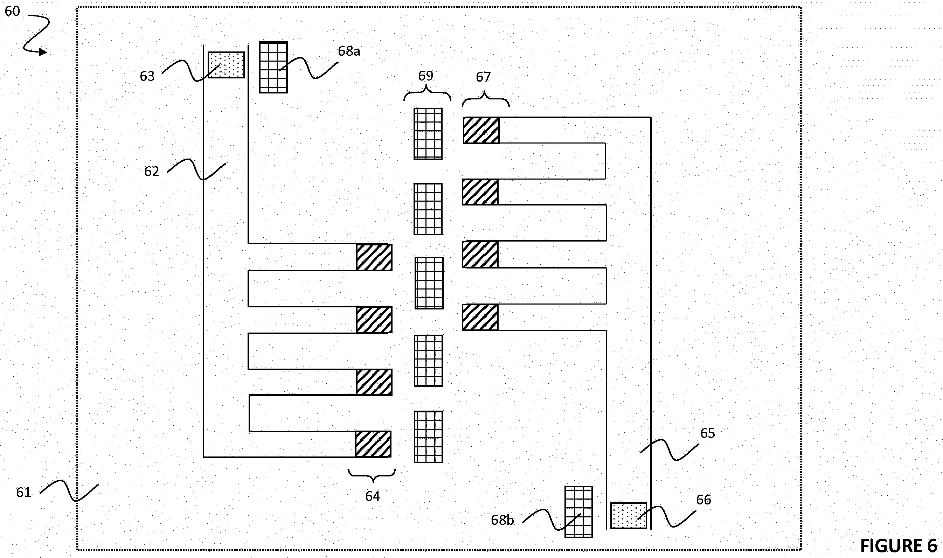

Figure 6 shows a plan view of a lower antenna portion 61 of an air waveguide antenna 60 of a second embodiment. The lower antenna portion 61 comprises two antenna sections fed by two respective waveguides, each associated with four radiating antenna slots. A first waveguide 62 extends substantially horizontally from a first vertical transition 63 to an MMIC (not shown), towards a first group 64 of four vertical radiating antenna slots, which may represent part of either a transmit antenna or a receive antenna. A second waveguide 65 extends from a second vertical transition 66 towards a second group 67 of four vertical antenna slots. Again, the second group 67 may represent part of either a transmit antenna or a receive antenna, and in Figure 6, the second group 67 is illustrated as a part of a receive antenna.

The lower antenna portion 61 contains cavities 68a, 68b adjacent to the vertical transitions 63, 66, and cavities 69 adjacent to the antenna slot groups 64, 67. Cavity 68a acts to reflect leakage back to air waveguide 62. Cavity 68b acts to reflect leakage back to air waveguide 65. Cavities 69 block leakage between the two antenna sections, and also reflect leakage back to waveguides 62 and 63.

The reduction in coupling between antennas that is achieved by the configuration of Figure 6 is advantageous in preventing, or substantially minimising, crosstalk between two transmit antennas, two receive antennas, or a transmit antenna and a receive antenna, depending on the specific configuration which is used. More generally, it is possible to position one or more of the cavities at positions which block leakage of electromagnetic energy in particular directions.

The representation illustrated in Figure 6 is a simplification, for the purpose of facilitating its description. In practice, the specific number and positions of the cavities should be tuned for optimised suppression of particular coupling paths, taking into account the manufacturing limits imposed by material choices.

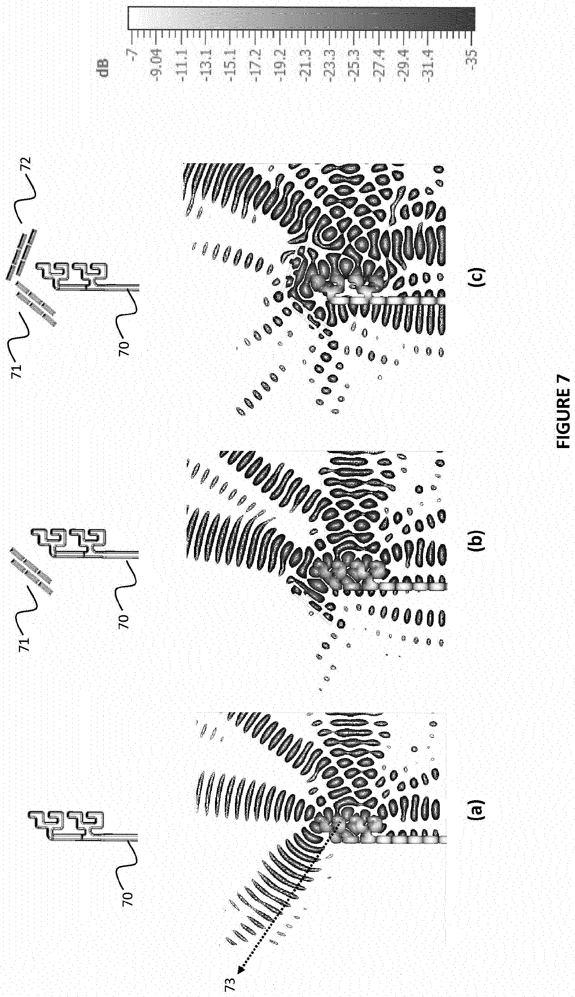

Figure 7 illustrates the principle of targeted attenuation of electromagnetic energy, with reference to a waveguide layout similar to that shown in Figure 6, in the case where the lower antenna portion is separated from an upper antenna portion by a microgap of 100µm.

Figure 7(a) shows an example of a waveguide 70 feeding four radiating slots, with no cavities adjacent to the radiating slots. The propagation of electric field energy in the microgap is illustrated in the field intensity plots, together with the higher intensity electric field energy of the waveguide itself. The energy leakage exists in well-defined directions which propagate out from the radiating slots, and as such, it is possible, in embodiments, to introduce cavities which extend (either individually, or as a group) in an orientation perpendicular to the expected direction of energy leakage.

Figure 7(b) illustrates the same waveguide arrangement of Figure 7(a), but here, a group 71 of cavities is added adjacent to the radiating slots, arranged at an angle which is perpendicular to a principal leakage direction 73 as illustrated in Figure 7(a). Each cavity of the group 71 has a rectangular opening, of which the longer edge defines the orientation of the extent of the cavity for the purposes of the description of this embodiment. The cavities are arranged in two rows of three, in which each rows extends in the same direction as the longitudinal extent of the cavity. Figure 7(b) shows that there is a significant reduction in leakage in a direction towards the upper left of the figure, which is perpendicular to the orientation of the cavities 71.

Figure 7(c) illustrates an extension to the principle illustrated in Figure 7(b), in which a further group 72 of cavities is added to reduce leakage towards the upper right of the cavity.

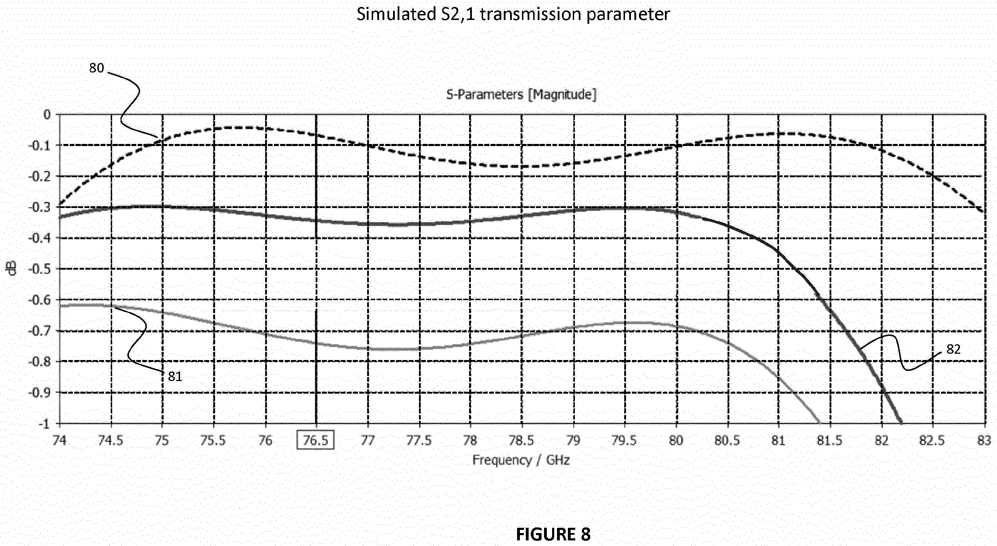

Figure 8 shows a comparison of a simulation of the effects of blocking cavities on a forward transmission scattering parameter (s-parameter), generally known as an S2,1 parameter, of an air waveguide antenna according to a third embodiment. The simulation is based on a metallic air waveguide transmission line, having a vertical transition portion, formed in two antenna half-pieces, separated by a 0.15mm air gap.

Three curves are shown in Figure 8, expressing the S2,1 parameter as attenuation of the wave guided by the air waveguide as a function of frequency. A dashed line 80 represents a reference case where there is no air gap, and therefore no energy leakage from the air waveguide. There is minimal attenuation between 76-81 GHz, with the curve close to 0dB.

A second curve 81 shows the effect of the introduction of the 0.15mm air gap, but without the introduction of cavities. There is much more attenuation of the electromagnetic wave, across all frequencies, with significant attenuation beginning at 80 GHz.

A third curve 82 shows the effect of the introduction of cavities into the system for the second curve, in which the cavities are adjacent to the vertical transition, in a manner illustrated in, for example, Figure 3. The cavities are disposed at a position such that the reflection of energy to the waveguide is in phase with the electromagnetic wave guided by the waveguide.

The attenuation is reduced in comparison to the second curve, showing the effect of reflecting energy back into the vertical transition. A comparison of the relative attenuations of the second and third curves shows that more than 50% of the energy is restored. Sufficient bandwidth is provided for 76-81 GHz operation.

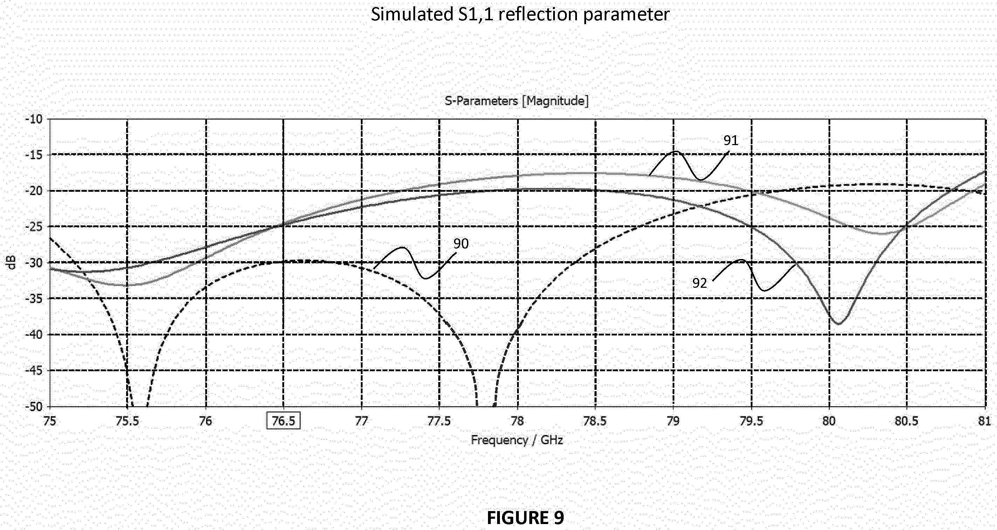

Figure 9 shows a comparison of a simulation of the effects of blocking cavities on an input reflection scattering parameter, generally known as an S1,1 parameter, of an air waveguide antenna according to the third embodiment described above in relation to Figure 8.

The S1,1 parameter can be considered in terms of reflections of the electromagnetic wave back to the MMIC, caused by impedance mismatches. For the reference case 90, with no air gap, it is seen that the impedance matching is such that there is substantial attenuation of reflections at 75.6 GHz and 77.8 GHz. The second curve 91, showing the effect of the introduction of the air gap shows that attenuation of reflections is reduced up to 79.5 GHz. The third curve 92, showing the effect of the cavities in addition to the air gap, shows a slight reduction in reflections, and thus a slight improvement in impedance matching. As such, the cavities do not have a negative impact on impedance matching.

In order to optimise performance, it is desirable to reflect electromagnetic energy back into the waveguide in phase with the electromagnetic energy carried in the waveguide. This ensures that the reflected energy interferes constructively with the guided electromagnetic wave. If there are elements of destructive interference between the reflected electromagnetic wave and the guided electromagnetic wave, characteristics such as the amplitude of the guided electromagnetic wave can be reduced.

In embodiments, some destructive interference can be tolerated, as the overall reduction in parallel plate mode energy leakage may outweigh and reduction in S2,1 attenuation of the guided electromagnetic wave. Further, reduction in coupling between different antenna paths can be significantly more beneficial than an S2,1 reduction in attenuation of 0.5dB, for example. For cavities which are positioned further from a waveguide, in order to shield an antenna from another antenna, for example, the blocking function may be more significant than the return of energy to the waveguide. As such it is not essential that the reflected energy is in phase with the guided electromagnetic wave.

Where in-phase reflections are to be employed, this is achieved by consideration of the distance between a cavity and a waveguide, configured such that the round-trip waveguide to cavity bottom reflection is a distance which is a multiple of the wavelength of the electromagnetic wave. By employing such a configuration, phase intervals of 360° or multiples of 360° are achieved.

It will be understood that the embodiments illustrated above show applications only for the purposes of illustration. In practice, embodiments may be applied to many different configurations, the detailed embodiments being straightforward for those skilled in the art to implement in view of the teaching set out in the present disclosure. Specific operating configurations can be designed and optimised from mathematical simulations, taking into account the operating frequency of the antenna, the physical materials used, and expected microgap sizes.

Automotive radar antennas are a particularly suitable application for the air waveguide antennas of the described embodiments. Such antennas typically operate in the range of 76-77 GHz. Magnesium is a material choice which is suitable for the antennas, but aluminium or metallised plastics are also suitable.

From the full-wave simulations performed by the inventors, it has been found that the effectiveness of the cavities is independent of whether the cavities are position on the upper half piece or the lower half piece of the antenna structure. Generally, the upper half piece of the antenna structure is associated with the radiating aperture or slots, from which the electromagnetic is transmitted to, or received from, free space. The lower half piece of the antenna structure is generally associated with the MMIC and underlying processing electronics. However the performance simulations suggest that there is flexibility in terms of whether to arrange the cavities on the upper or lower pieces, and so positions can be optimised to take into account spatial constraints imposed by the waveguide routing.

Particularly, an effective configuration is one in which cavities are arranged on both the upper and lower antenna portions in an alternating or staggered configuration, such that no cavity on one portion overlaps with a cavity on another portion. This arrangement can optimise usage of space, allowing cavities to be positioned more closely together, given material limitations such as minimum permissible wall thickness, and cavity sidewall curve specifications, than would be the case if they were arranged on the same antenna portion. When combined with specific features such as directional attenuation, and for complex waveguide routing structures employing slotted waveguides, or elaborate antenna slots, the ability to distribute the cavities across the two portions of the antenna is advantageous. In contrast, if there is overlap of cavities, this can represent redundant arrangement of cavities since the presence of two overlapping cavities at the same spacing from the waveguide is not found to increase performance.

In summary, the use of cavities in the enables a cost-neutral countermeasure against leakage effects which arise as a result of air gaps between antenna pieces. By applying resonant cavities within one or both half pieces or the antenna, the propagating parallel plate mode within the air gap can be controlled and redirected.

The improvement in RF performance which is achieved may be expressed in a number of different way, particularly the reduction of signal loss and gain reduction due to leakage, the maintenance of angular coverage of a device such as a radar, the increase in signal to noise, and the reduction in inter-antenna coupling. The reduction in such crosstalk applies whether in consideration of multiple antennas on the same device, such as transmit/receive antennas of a radar, or in view of an intention to position the antenna in proximity to further antennas as part of a larger system design. Further, air waveguide antennas which are produced to have this configuration are more likely to comply with required performance specifications of their target device, such as an automotive antenna, reducing wastage in components.

Further, the reduction in parallel plate mode energy leakage renders air waveguide antennas of embodiments more robust against variations in air gap during the lifetime of the antenna. Such variations may occur as a result of, for example, thermal expansion and contraction. In the absence of the cavities of embodiments, a change in the air gap size would cause fluctuations in the performance of a device such as a radar containing the antennas, and could potentially introduce blind spots, or regions with additional azimuthal and elevation angular error, at particular angular azimuthal or elevation positions at which the leakage is sufficient to take the radar out of the operating range for which it was originally calibrated.

As described above, the method of manufacturing air waveguide antennas of embodiments can begin after the provision of first and second antenna portions, which contain first and second waveguide portions in respective first and surfaces. The method, according to embodiments, comprises adding cavities at the required positions, prior to fitting the antenna portions together, such that any parallel plate mode energy leakage that would otherwise be introduced after fitting the antenna portions together, is substantially reduced or eliminated. In some embodiments, the cavities are formed in the antenna portions at the same time as the formation of the waveguide portions, so that both waveguide routing and cavity layout are implemented in the same injection moulding process, which represents an increase in the efficiency of the manufacturing process.

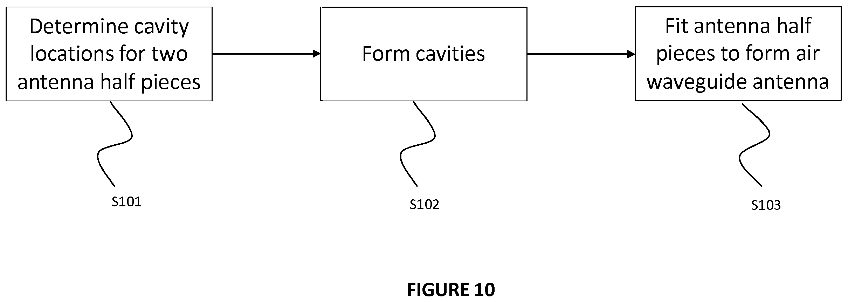

Figure 10 illustrates a manufacturing process according to a fourth embodiment. In step S101, two antenna portions are provided, which contain waveguide portions to be combined to form an air waveguide. Process parameters are determined in order to identify the location of one or more cavities which will reduce parallel plate mode energy leakage when the two antenna portions are fitted together.

Such process parameters include material parameters, and the intended operating frequency, which affects cavity dimensions. The cavities own resonant frequency is dimension-dependent, and the lateral spacing of a cavity from an air waveguide affects the phase of reflected energy. The position of the waveguides can take into account the required reduction in leakage, based on the principle that any reduction in leakage represents an improvement in RF performance over conventional systems, and that it may not be necessary to introduce more cavities than is necessary.

Further, the required minimisation of inter-antenna coupling, and the directionality of such minimisation affects the positioning of cavities on the surface of the antenna portions are considered.

A further parameter to be considered is an expected gap size, variability of gap size, and predicted evolution of gap size over product lifetime, to arise after fitting two antenna portions together. Such information may be derived from manufacturing tolerances associated with the process of forming the antenna portions and material specifications. Historical manufacturing data may also be analysed to derive pervious gap sizes arising from similar configurations. Mathematical simulation may also be employed.

The analysis of S101 is achieved via mathematical simulation using a computer-executable program.

In step S102, the cavities are formed using an injection moulding process.

In step S103, the two antenna portions are fitted together to form the air waveguide antenna.

It will be appreciated that in embodiments, the information and analysis required in step S101 can be performed by an external system and the required information is simply input to the manufacturing process of the embodiments. In this sense, step S101 is not essential to the embodiments. Alternatives to injection moulding, such as etching, laser-cutting, stamping and additive manufacturing are also possible in step S102.

## Claims

1. A method of manufacturing an air waveguide antenna (30) formed of a first antenna portion (31) comprising a first surface (33) having a first air waveguide portion (36) therein, and a second antenna portion (32) comprising a second surface (34) having a second air waveguide portion (37) therein;
forming one or more cavities (39a, 39b) in one or both of the first and second surfaces; and
determining one or more principal leakage directions (73) of the parallel plate mode energy leakage; and
fitting the first and second antenna portions together with the first and second surfaces facing each other, such that the first and second air waveguide portions oppose each other to form an air waveguide (38);
wherein the one or more cavities have a longitudinal extent at an orientation along the first and/or second surfaces which is perpendicular to the determined one or more principal leakage directions; and
wherein the one or more cavities are such that parallel plate mode energy leakage of an electromagnetic wave guided by the air waveguide, through an air gap (35) between the fitted first and second surfaces, is redirected.

2. A method according to claim 1, wherein the one or more of cavities (39a, 39b) include a cavity disposed adjacent to the respective first or second air waveguide portion (37, 38), such that the parallel plate mode energy leakage is reflected back into the air waveguide (38).

3. A method according to claim 1 or claim 2, comprising forming the one or more cavities (39a, 39b) to have dimensions in accordance with the frequency of the electromagnetic wave to be guided by the air waveguide (38), such that the reflected energy is in phase with the guided electromagnetic wave.

4. A method according to any one of claims 1 to 3, comprising forming the one or more cavities (39a, 39b) on the first (33) and/or second (34) surfaces at positions so as to reduce crosstalk between the air waveguide (38) and one or more further air waveguides of one or more respective further antennas.

5. A method according to any one of the preceding claims wherein forming the one or more cavities (39a, 39b) comprises forming one or more cavities in the first surface (33), and one or more cavities in the second surface (34), wherein none of the one or more cavities in the first surface is aligned with a cavity in the second surface when the first and second antenna portions are fitted together.

6. A method according to any one of the preceding claims wherein the one or more cavities (39a, 39b) have a depth of 0.5mm to 0.9mm, and optionally 0.7mm.

7. A method according to any one of the preceding claims, comprising forming the one or more cavities (39a, 39b) adjacent to a transition portion (40) of the air waveguide (38) for guiding an electromagnetic wave out of the antenna to either free space, or to a monolithic microwave integrated circuit, MMIC.

8. A method according to claim 7 wherein the first antenna portion (31) is an upper antenna portion, and the second antenna portion (32) is a lower antenna portion, and the vertical centre of each of the at least one of the one or more cavities (39a, 39b), in a direction extending between the upper and lower antenna portions, is aligned, in a horizontal direction, with the vertical centre of the transition portion (40) of the air waveguide (38).

9. A method according to any one of the preceding claims, wherein a transition between the first or second surface (33, 34) and a sidewall of a cavity is curved.

10. A method according to any one of the preceding claims, comprising forming the one or more cavities (39a, 39b) using injection moulding.

11. An air waveguide antenna (30), comprising:
a first antenna portion (31) comprising a first surface (33) having a first air waveguide portion (36) therein, and a second antenna portion (32) comprising a second surface (34) having a second air waveguide portion (37) therein; and
one or more cavities (39a, 39b) in one or both of the first and second surfaces;
wherein the first and second antenna portions are arranged to fit together with the first and second surfaces facing each other, such that the first and second air waveguide portions oppose each other to form an air waveguide (38);
wherein the one or more cavities comprise a first group of cavities (71) having a first longitudinal extent at an orientation along the first and/or second surfaces which is perpendicular to a first principal leakage direction (73), and a second group of cavities (72) having a second longitudinal extent at an orientation along the first and/or second surfaces which is perpendicular to a second principal leakage direction different from the first principal leakage direction;
wherein the one or more cavities are such that parallel plate mode energy leakage of an electromagnetic wave guided by the air waveguide (38), through an air gap (35) between the fitted first and second surfaces, is redirected.

12. An air waveguide antenna according to claim 11, wherein the one or more cavities (39a, 39b) include a cavity disposed adjacent to the respective first (36) or second (37) air waveguide portion, such that the parallel plate mode energy leakage is reflected back into the air waveguide (38).

13. An automotive radar comprising an air waveguide antenna (30) according to claim 11 or claim 12, wherein the air waveguide (38) comprises a transition portion (40) for guiding an electromagnetic wave out of the antenna to either free space, or to a monolithic microwave integrated circuit, MMIC, and at least one of the one or more cavities (39a, 39b) is disposed adjacent to the transition portion of the air waveguide.

14. An automotive radar comprising a plurality of air waveguide antennas (30) according to claim 11 or claim 12, wherein the one or more cavities (39a, 39b) are arranged between each of the plurality of antennas to reduce crosstalk between the plurality of antennas.

## Patentansprüche

1. Verfahren zum Herstellen einer Luftwellenleiter-Antenne (30), die aus einem ersten Antennenteil (31), das eine erste Oberfläche (33) mit einem ersten Luftwellenleiter-Abschnitt (36) darin aufweist, und einem zweiten Antennenteil (32), das eine zweite Oberfläche (34) mit einem zweiten Luftwellenleiter-Abschnitt (37) darin aufweist, gebildet ist;
Ausbilden eines oder mehrerer Hohlräume (39a, 39b) in einer oder beiden der ersten und zweiten Oberfläche; und
Bestimmen einer oder mehrerer Hauptleckagerichtungen (73) des Energieverlusts durch den Parallelplattenmodus; und
Zusammenfügen des ersten und des zweiten Antennenteils, wobei die erste und die zweite Oberfläche einander zugewandt sind, sodass der erste und der zweite Luftwellenleiter-Abschnitt einander gegenüberliegen und einen Luftwellenleiter (38) bilden;
wobei der eine oder die mehreren Hohlräume eine Längserstreckung mit einer Ausrichtung entlang der ersten und/oder zweiten Oberfläche aufweisen, die senkrecht zu der bestimmten einen oder den mehreren Hauptleckagerichtungen verläuft; und
wobei der eine oder die mehreren Hohlräume so ausgebildet sind, dass ein Energieverlust im Parallelplattenmodus einer durch den Luftwellenleiter geführten elektromagnetischen Welle durch einen Luftspalt (35) zwischen der zusammengefügten ersten und zweiten Oberfläche umgeleitet wird.

2. Verfahren nach Anspruch 1, wobei der eine oder die mehreren Hohlräume (39a, 39b) einen Hohlraum einschließen, der benachbart zu dem jeweiligen ersten oder zweiten Luftwellenleiter-Abschnitt (37, 38) angeordnet ist, sodass der Energieverlust im Parallelplattenmodus zurück in den Luftwellenleiter (38) reflektiert wird.

3. Verfahren nach Anspruch 1 oder Anspruch 2, umfassend das Ausbilden des einen oder der mehreren Hohlräume (39a, 39b) mit Abmessungen entsprechend der Frequenz der durch den Luftwellenleiter (38) zu führenden elektromagnetischen Welle, sodass die reflektierte Energie mit der geführten elektromagnetischen Welle phasengleich ist.

4. Verfahren nach einem der Ansprüche 1 bis 3, umfassend das Ausbilden des einen oder der mehreren Hohlräume (39a, 39b) auf der ersten (33) und/oder der zweiten (34) Oberfläche an Positionen, die so gewählt sind, dass Übersprechen zwischen dem Luftwellenleiter (38) und einem oder mehreren weiteren Luftwellenleitern einer oder mehrerer entsprechender weiterer Antennen reduziert wird.

5. Verfahren nach einem der vorhergehenden Ansprüche, wobei das Ausbilden des einen oder der mehreren Hohlräume (39a, 39b) das Ausbilden eines oder mehrerer Hohlräume in der ersten Oberfläche (33) und eines oder mehrerer Hohlräume in der zweiten Oberfläche (34) umfasst, wobei keiner des einen oder der mehreren Hohlräume in der ersten Oberfläche an einem Hohlraum in der zweiten Oberfläche ausgerichtet ist, wenn das erste und das zweite Antennenteil zusammengefügt sind.

6. Verfahren nach einem der vorhergehenden Ansprüche, wobei der eine oder die mehreren Hohlräume (39a, 39b) eine Tiefe von 0,5 mm bis 0,9 mm und optional von 0,7 mm aufweisen.

7. Verfahren nach einem der vorhergehenden Ansprüche, umfassend das Ausbilden des einen oder der mehreren Hohlräume (39a, 39b) benachbart zu einem Übergangsabschnitt (40) des Luftwellenleiters (38), um eine elektromagnetische Welle aus der Antenne entweder in den freien Raum oder zu einer monolithischen integrierten Mikrowellenschaltung (MMIC) zu führen.

8. Verfahren nach Anspruch 7, wobei das erste Antennenteil (31) ein oberes Antennenteil und das zweite Antennenteil (32) ein unteres Antennenteil ist und wobei das vertikale Zentrum jedes des mindestens einen des einen oder der mehreren Hohlräume (39a, 39b) in einer Richtung, die sich zwischen dem oberen und dem unteren Antennenteil erstreckt, in horizontaler Richtung an dem vertikalen Zentrum des Übergangsabschnitts (40) des Luftwellenleiters (38) ausgerichtet ist.

9. Verfahren nach einem der vorhergehenden Ansprüche, wobei ein Übergang zwischen der ersten oder zweiten Oberfläche (33, 34) und einer Seitenwand eines Hohlraums gekrümmt ist.

10. Verfahren nach einem der vorhergehenden Ansprüche, umfassend das Ausbilden des einen oder der mehreren Hohlräume (39a, 39b) mittels Spritzgießen.

11. Luftwellenleiter-Antenne (30), umfassend:
ein erstes Antennenteil (31), das eine erste Oberfläche (33) mit einem ersten Luftwellenleiter-Abschnitt (36) darin aufweist, und ein zweites Antennenteil (32), das eine zweite Oberfläche (34) mit einem zweiten Luftwellenleiter-Abschnitt (37) darin aufweist, und
einen oder mehrere Hohlräume (39a, 39b) in einer oder beiden der ersten und zweiten Oberfläche;
wobei das erste und das zweite Antennenteil so ausgebildet sind, dass sie mit den einander zugewandten ersten und zweiten Oberflächen zusammengefügt werden, sodass der erste und der zweite Luftwellenleiter-Abschnitt einander gegenüberliegen und einen Luftwellenleiter (38) bilden;
wobei der eine oder die mehreren Hohlräume eine erste Gruppe von Hohlräumen (71) mit einer ersten Längserstreckung mit einer Ausrichtung entlang der ersten und/oder zweiten Oberfläche umfassen, die senkrecht zu einer ersten Hauptleckagerichtung (73) verläuft, und eine zweite Gruppe von Hohlräumen (72) mit einer zweiten Längserstreckung mit einer Ausrichtung entlang der ersten und/oder zweiten Oberfläche, die senkrecht zu einer zweiten Hauptleckagerichtung verläuft, die von der ersten Hauptleckagerichtung verschieden ist;
wobei der eine oder die mehreren Hohlräume so ausgebildet sind, dass ein Energieverlust im Parallelplattenmodus einer durch den Luftwellenleiter (38) geführten elektromagnetischen Welle durch einen Luftspalt (35) zwischen der zusammengefügten ersten und zweiten Oberfläche umgeleitet wird.

12. Luftwellenleiter-Antenne nach Anspruch 11, wobei der eine oder die mehreren Hohlräume (39a, 39b) einen Hohlraum einschließen, der benachbart zu dem jeweiligen ersten (36) oder zweiten (37) Luftwellenleiter-Abschnitt angeordnet ist, sodass der Energieverlust im Parallelplattenmodus zurück in den Luftwellenleiter (38) reflektiert wird.

13. Kraftfahrzeugradar mit einer Luftwellenleiter-Antenne (30) nach Anspruch 11 oder Anspruch 12, wobei der Luftwellenleiter (38) einen Übergangsabschnitt (40) zum Führen einer elektromagnetischen Welle aus der Antenne entweder in den freien Raum oder zu einer monolithischen integrierten Mikrowellenschaltung (MMIC) umfasst und mindestens einer des einen oder der mehreren Hohlräume (39a, 39b) benachbart zu dem Übergangsabschnitt des Luftwellenleiters angeordnet ist.

14. Kraftfahrzeugradar mit einer Vielzahl von Luftwellenleiter-Antennen (30) nach Anspruch 11 oder Anspruch 12, wobei der eine oder die mehreren Hohlräume (39a, 39b) zwischen den einzelnen Antennen der Vielzahl von Antennen angeordnet sind, um Übersprechen zwischen der Vielzahl von Antennen zu reduzieren.

## Revendications

1. Procédé de fabrication d'une antenne à guide d'ondes à air (30) formée d'une première partie d'antenne (31) comprenant une première surface (33) présentant une première partie de guide d'ondes à air (36) dans celle-ci et une seconde partie d'antenne (32) comprenant une seconde surface (34) présentant une seconde partie de guide d'ondes à air (37) dans celle-ci ;
formant une ou plusieurs cavités (39a, 39b) dans l'une et/ou l'autre parmi les première et seconde surfaces ; et
déterminant une ou plusieurs directions de fuite principales (73) de la fuite d'énergie en mode plaque parallèle ; et
ajustant ensemble les première et seconde parties d'antenne, les première et seconde surfaces se faisant face, de sorte que les première et seconde parties de guide d'ondes à air soient opposées l'une à l'autre pour former un guide d'ondes à air (38) ;
dans lequel la ou les cavités présentent une étendue longitudinale selon une orientation le long des première et/ou seconde surfaces qui sont perpendiculaires à la ou aux directions de fuite principales déterminées ; et
dans lequel la ou les cavités sont telles que la fuite d'énergie en mode plaque parallèle d'une onde électromagnétique guidée par le guide d'ondes à air, à travers un espace d'air (35) entre les première et seconde surfaces ajustées, est redirigée.

2. Procédé selon la revendication 1, dans lequel la ou les cavités (39a, 39b) comportent une cavité disposée adjacente à la première ou à la seconde partie de guide d'ondes à air respective (37, 38), de sorte que la fuite d'énergie en mode plaque parallèle est renvoyée vers le guide d'ondes à air (38).

3. Procédé selon la revendication 1 ou la revendication 2, comprenant la formation de la ou des cavités (39a, 39b) dont les dimensions sont en accord avec la fréquence de l'onde électromagnétique devant être guidée par le guide d'ondes à air (38), de sorte que l'énergie réfléchie est en phase avec l'onde électromagnétique guidée.

4. Procédé selon l'une quelconque des revendications 1 à 3, comprenant la formation de la ou des cavités (39a, 39b) sur les première (33) et/ou seconde (34) surfaces à des positions de manière à réduire la diaphonie entre le guide d'ondes à air (38) et un ou plusieurs autres guides d'ondes à air d'une ou plusieurs autres antennes respectives.

5. Procédé selon l'une quelconque des revendications précédentes, dans lequel la formation de la ou des cavités (39a, 39b) comprend la formation d'une ou plusieurs cavités dans la première surface (33) et d'une ou plusieurs cavités dans la seconde surface (34), dans lequel aucune de la ou des cavités dans la première surface n'est alignée avec une cavité dans la seconde surface lorsque les première et seconde parties d'antenne sont ajustées ensemble.

6. Procédé selon l'une quelconque des revendications précédentes, dans lequel la ou les cavités (39a, 39b) présentent une profondeur de 0,5 mm à 0,9 mm et éventuellement de 0,7 mm.

7. Procédé selon l'une quelconque des revendications précédentes, comprenant la formation de la ou des cavités (39a, 39b) adjacentes à une partie de transition (40) du guide d'ondes à air (38) destinées à guider une onde électromagnétique hors de l'antenne soit vers l'espace libre, soit vers un circuit intégré hyperfréquence monolithique, MMIC.

8. Procédé selon la revendication 7, dans lequel la première partie d'antenne (31) est une partie d'antenne supérieure et la seconde partie d'antenne (32) est une partie d'antenne inférieure et le centre vertical de chacune de ladite ou moins une parmi la ou les cavités (39a, 39b), dans une direction s'étendant entre les parties d'antenne supérieure et inférieure, est aligné, dans une direction horizontale, avec le centre vertical de la partie de transition (40) du guide d'ondes à air (38).

9. Procédé selon l'une quelconque des revendications précédentes, dans lequel une transition entre la première ou la seconde surface (33, 34) et une paroi latérale d'une cavité est incurvée.

10. Procédé selon l'une quelconque des revendications précédentes, comprenant la formation de la ou des cavités (39a, 39b) à l'aide d'un moulage par injection.

11. Antenne à guide d'ondes à air (30), comprenant :
une première partie d'antenne (31) comprenant une première surface (33) présentant une première partie de guide d'ondes à air (36) dans celle-ci et une seconde partie d'antenne (32) comprenant une seconde surface (34) présentant une seconde partie de guide d'ondes à air (37) dans celle-ci ; et
une ou plusieurs cavités (39a, 39b) dans l'une et/ou l'autre parmi les première et seconde surfaces ;
dans lequel les première et seconde parties d'antenne sont agencées de manière à s'ajuster ensemble, les première et seconde surfaces se faisant face, de sorte que les première et seconde parties de guide d'ondes à air soient opposées l'une à l'autre pour former un guide d'ondes à air (38) ;
dans lequel la ou les cavités comprennent un premier groupe de cavités (71) présentant une première étendue longitudinale selon une orientation le long des première et/ou seconde surfaces perpendiculaires à une première direction de fuite principale (73) et un second groupe de cavités (72) présentant une seconde étendue longitudinale selon une orientation le long des première et/ou seconde surfaces perpendiculaires à une seconde direction de fuite principale différente de la première direction de fuite principale ;
dans lequel la ou les cavités sont telles que la fuite d'énergie en mode plaque parallèle d'une onde électromagnétique guidée par le guide d'ondes à air (38), à travers un espace d'air (35) entre les première et seconde surfaces ajustées, est redirigée.

12. Antenne à guide d'ondes à air selon la revendication 11, dans lequel la ou les cavités (39a, 39b) comportent une cavité disposée adjacente à la première (36) ou à la seconde (37) partie de guide d'ondes à air respective, de sorte que la fuite d'énergie en mode plaque parallèle est renvoyée vers le guide d'ondes à air (38).

13. Radar automobile comprenant une antenne à guide d'ondes à air (30) selon la revendication 11 ou la revendication 12, dans lequel le guide d'ondes à air (38) comprend une partie de transition (40) destinée à guider une onde électromagnétique hors de l'antenne, soit vers un espace libre, soit vers un circuit intégré hyperfréquence monolithique, MMIC, et au moins une parmi la ou les cavités (39a, 39b) est disposée adjacente à la partie de transition du guide d'ondes à air.

14. Radar automobile comprenant une pluralité d'antennes à guide d'ondes à air (30) selon la revendication 11 ou la revendication 12, dans lequel la ou les cavités (39a, 39b) sont agencées entre chaque antenne de la pluralité d'antennes pour réduire la diaphonie entre la pluralité d'antennes.
